# EUROPÄISCHE PATENTSCHRIFT

(11) **EP 2 168 428 B1**
(45) Veröffentlichungstag und Bekanntmachung des Hinweises auf die Patenterteilung: **04.04.2012**
(21) Anmeldenummer: 09011107.1
(22) Anmeldetag: 29.08.2009
(51) Int. Cl.: A01G 27/02

(54) **Einsatz-Behälter für Pflanzentöpfe**
Insert container for plant pots
Récipient d'utilisation pour pots de plantes

(30) Priorität: 29.09.2008 DE 102008049361
(43) Veröffentlichungstag der Anmeldung: 31.03.2010
(73) Patentinhaber: Geobra Brandstätter GmbH & Co. KG, D-90513 Zirndorf (DE)
(72) Erfinder: Brandstätter, Conny, 90768 Fürth (DE)
(74) Vertreter: Rau, Albrecht

(56) Entgegenhaltungen:
- DE-B3-102006 048 756
- DE-U1-202005 012 842
- DE-U1-202005 018 519
- US-A1- 2006 230 678

## Beschreibung

Die Erfindung betrifft einen Einsatz Behälter für Pflanztöpfe.

Aus der DE 299 16 691 U1 ist ein Pflanztopf bekannt, der einen AußenBehälter aufweist, in welchem ein Zwischenboden eingesetzt ist, der zwischen sich und dem Boden des Außen-Behälters einen Wasser-Vorratsraum begrenzt. Aus diesem Wasser-Vorratsraum können sich in den Pflanztopf eingepflanzte Pflanzen über eine längere Zeit selbst mit Wasser versorgen. Diese Pflanztöpfe haben sich in der Praxis sehr bewährt. Ihre Herstellung ist jedoch verhältnismäßig aufwändig.

Die DE 20 2005 012 842 U1 offenbart einen in einen Außentopf einstellbaren Kulturtopf nach dem Oberbegriff des Anspruchs 1 mit einem Wasserstandsanzeiger. Weitere Pflanztöpfe sind beispielsweise aus der US 2006/0230678 A1 und aus der DE 10 2006 048 756 B3 bekannt.

Der Erfindung liegt daher die Aufgabe zugrunde, dieses System der selbstständigen Bewässerung für beliebige Übertöpfe zugänglich zu machen.

Diese Aufgabe wird durch einen Einsatz-Behälter gemäß Anspruch 1 gelöst. Der Kern der Erfindung besteht darin, einen Einsatz-Behälter zu schaffen, welcher in einen beliebigen Übertopf eingesetzt werden kann und im eingesetzten Zustand einen Innenraum zu Einpflanzen einer Pflanze von einem unterhalb desselben gebildeten Wasser-Vorratsraum trennt.

Ein kreisrunder Querschnitt entspricht einer üblichen Form für Übertöpfe.

Ein Einsatz-Behälter aus Kunststoff ist gleichermaßen einfach zu fertigen und feuchtigkeitsbeständig.

Über Bewässerungs-Einrichtungen, die als topfartige Vertiefungen im Boden ausgebildet sind, können die in den Einsatz-Behälter eingepflanzten Pflanzen ihre Wurzeln bis in den Wasser-Vorratsraum hineinwachsen lassen.

Weitere Vorteile ergeben sich aus den Unteransprüchen.

Merkmale und Einzelheiten der Erfindung ergeben sich aus der Beschreibung mehrerer Ausführungsbeispiele anhand der Zeichnungen.

Es zeigen:
- Fig. 1: eine Gesamtansicht eines in einen Übertopf eingesetzten Ein- satz-Behälters gemäß einem ersten Ausführungsbeispiel,
- Fig. 2: eine Schnitt-Darstellung eines in einen Übertopf eingesetzten Einsatz-Behälters gemäß Fig. 1,
- Fig. 3: eine Explosionsdarstellung des Ausführungsbeispiels gemäß Fig. 1,
- Fig. 4: eine erste Seiten-Ansicht des Einsatz-Behälters gemäß Fig. 1,
- Fig. 5: eine zweite, um 90° gedrehte Seiten-Ansicht des Einsatz- Behälters gemäß Fig. 1,
- Fig. 6: eine Ansicht von unten des Einsatz-Behälters gemäß Fig. 1,
- Fig. 7: eine Darstellung gemäß Fig. 3 gemäß einem zweiten Ausfüh- rungsbeispiel,
- Fig. 8: eine Ansicht von oben des Einsatz-Behälters gemäß dem zweiten Ausführungsbeispiel,
- Fig. 9: eine Seitenansicht des Einsatz-Behälters gemäß dem zweiten Ausführungsbeispiel,
- Fig. 10, 11, 12: Ansichten eines Einsatz-Behälters gemäß einem dritten Ausführungsbeispiel der Erfindung, und
- Fig. 13 und 14: Ansichten eines Einsatz-Behälters gemäß einem vier- ten Ausführungsbeispiel der Erfindung.

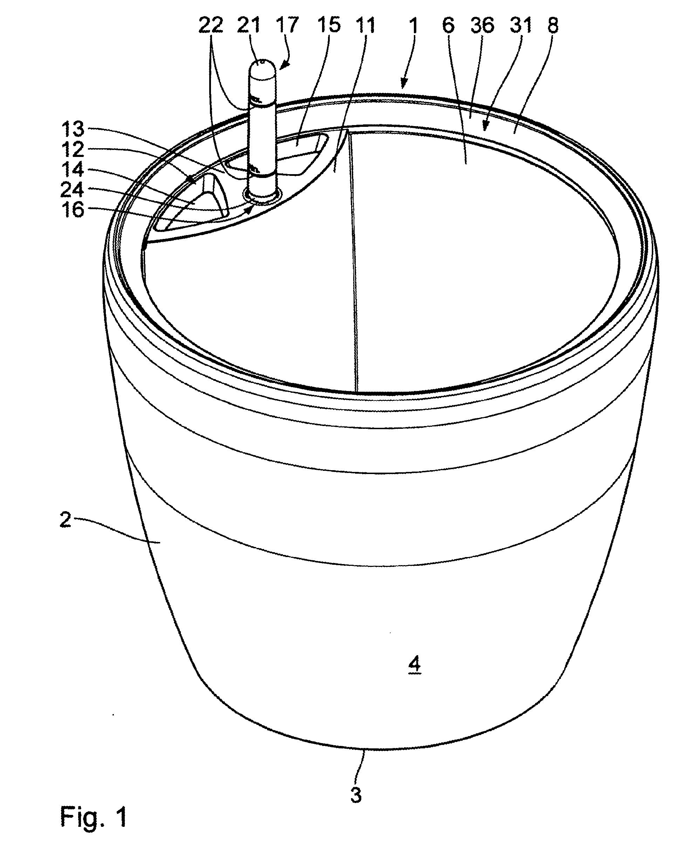

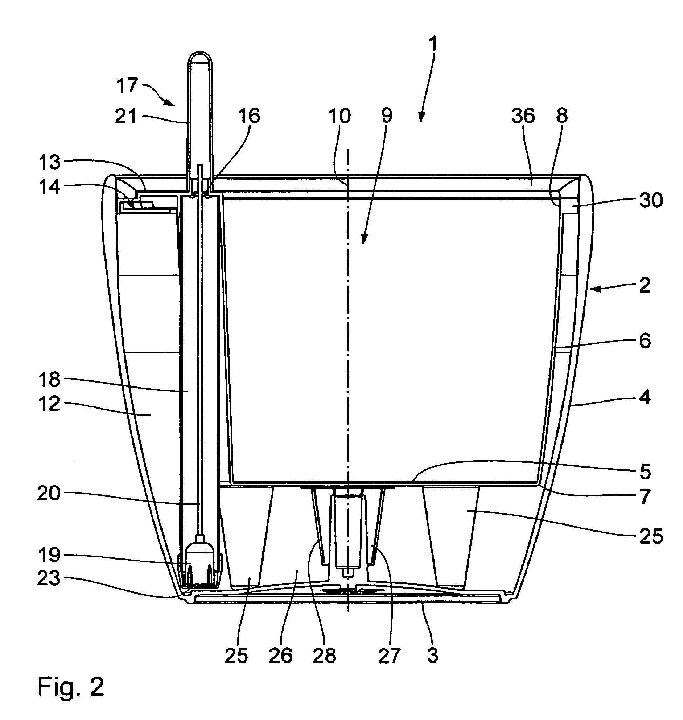

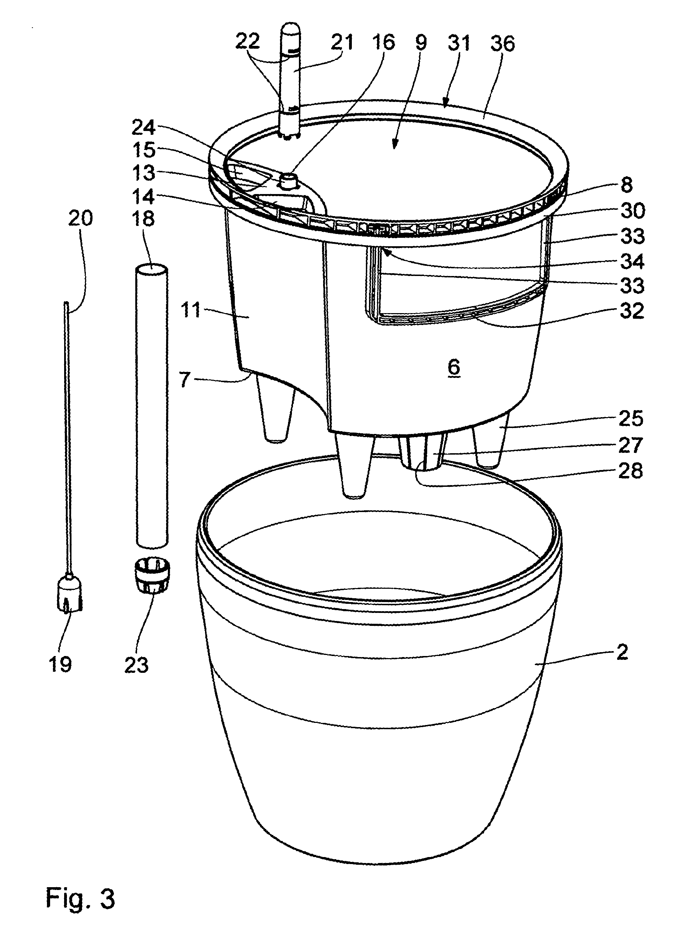

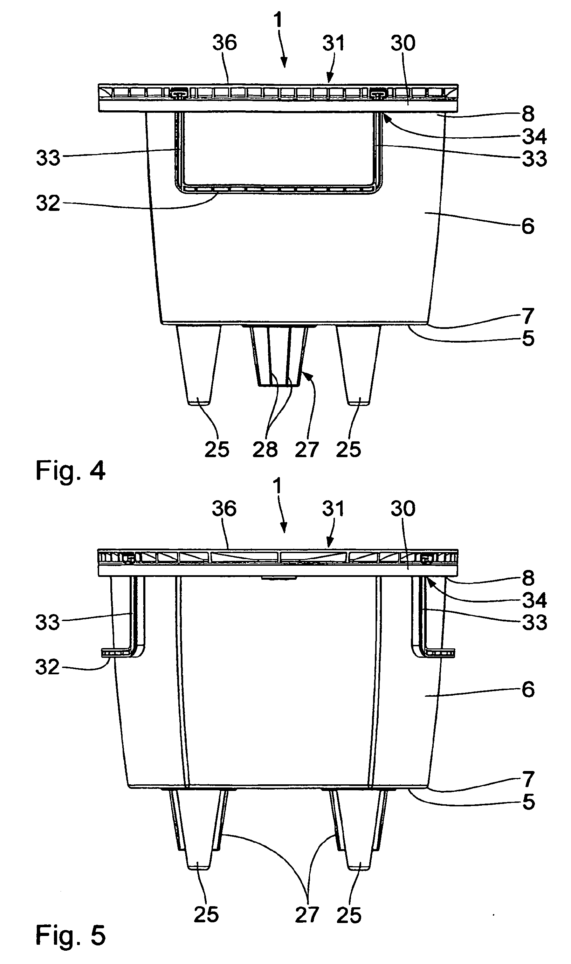

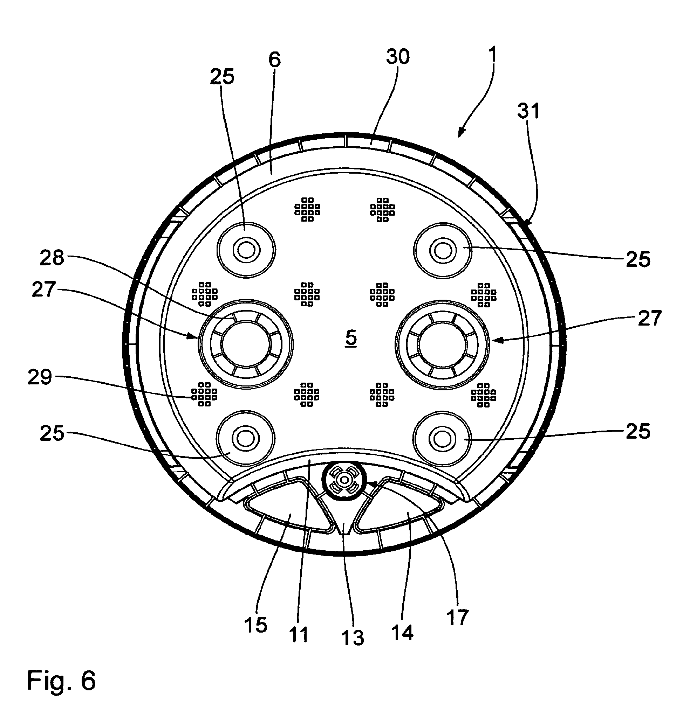

Im Folgenden wird unter Bezugnahme auf die Fig. 1 bis 6 ein erstes Ausführungsbeispiel der Erfindung beschrieben. Ein Einsatz-Behälter 1 für Pflanzen ist in einen Übertopf 2 einsetzbar. Der Übertopf 2 weist einen Übertopf-Boden 3 und eine Übertopf-Seitenwand 4 auf.

Der Einsatz-Behälter 1 ist aus einem wasserfesten Material, insbesondere aus Kunststoff. Der Einsatz-Behälter 1 kann aus Recyclat hergestellt sein.

Der Einsatz-Behälter 1 weist einen Boden 5 sowie mindestens eine Seitenwand 6 auf, welche mit einem unteren Rand 7 an den Boden 5 angrenzt, mit einem oberen Rand 8 nach oben offen ausgebildet ist und einen Innenraum 9 zum Bepflanzen umschließt. Der Einsatz-Behälter 1 weist eine senkrecht zum Boden 5 verlaufende Längsachse 10 auf. Die Seitenwand 6 ist abgesehen von einer sich in Richtung der Längsachse 10 erstreckenden Einbuchtung 11 rotationssymmetrisch zur Längsachse 10 ausgebildet. Sie ist insbesondere hohlzylinderförmig ausgebildet. Sie kann jedoch auch vorzugsweise leicht konisch zulaufend ausgebildet sein und somit im Bereich des unteren Randes 7 einen geringeren Umfang aufweisen als im Bereich des oberen Randes 8.

Der obere Rand 8 hat vorzugsweise einen runden, insbesondere eine ringförmigen, insbesondere einen kreisringförmigen Querschnitt. Der obere Rand 8 ist als umlaufender Randsteg 30 ausgebildet.

Die Einbuchtung 11 ist vom Innenraum 9 des Einsatz-Behälters 1 aus gesehen konkav ausgebildet. Es ist jedoch auch denkbar, die Einbuchtung 11 eben auszubilden. Andere Ausführungen der Einbuchtung 11 sind ebenfalls denkbar. Die Einbuchtung 11 bildet zusammen mit einem Teil der Übertopf-Seitenwand 4 einen Wasser-Einfiillschacht 12, welcher sich über die gesamte Länge des Einsatz-Behälters 1 erstreckt. Der Wasser-Einfiillschacht 12 ist im Bereich des oberen Randes 8 des Einsatz-Behälters 1 durch eine deckelartige Abdeckung 13 abgedeckt. In der Abdeckung 13 sind zwei Wasser-Einfüllöffnungen 14, 15 ausgebildet. Zwischen diesen beiden Wasser-Einfüllöffnungen 14, 15 ist eine zusätzliche Öffnung 16 für einen Wasserstands-Anzeiger 17 ausgebildet. Der Wasserstands-Anzeiger 17 ist somit im Wasser-Einfiillschacht 12 außerhalb des Innenraums 9 angeordnet.

Der Wasserstands-Anzeiger 17 umfasst ein Rohr 18, in welchem ein Schwimmer 19 mit einem daran befestigen Anzeigestab 20 angeordnet ist. Der Anzeigestab 20 ragt durch die Öffnung 16 und ist von außen durch einen transparenten Anzeige-Abschnitt 21 sichtbar. Der Anzeige-Abschnitt 21 weist verschiedene Markierungen 22 auf, welche einen Hinweis auf die Füllstandshöhe des Wassers im Übertopf 2 geben. Das Rohr 18 ist an seinem unteren Ende mit einer wasserdurchlässigen Abschluss-Kappe 23 verschlossen. Das Rohr 18 ist durch einen oberen Bund 24 in der Öffnung 16 gehalten, so dass es eine definierte feste Position relativ zur Öffnung 16 hat.

Der Einsatz-Behälter 1 weist an seinem Boden 5 nach unten ragende, hohl ausgebildete, aber nach unten geschlossene Stützen 25 auf. Gemäß dem ersten Ausführungsbeispiel weist der Einsatz-Behälter 1 vier Stützen 25 auf. Eine andere Anzahl Stützen ist jedoch ebenfalls möglich. Es ist insbesondere denkbar, den Einsatz-Behälter 1 mit drei Stützen 25 auszubilden. Mittels der Stützen 25 ist der Einsatz-Behälter 1 am Übertopf-Boden 3 abgestützt. Die Stützen 25 erstrecken sich ausgehend vom Boden 5 in Richtung der Längsachse 10 aus dem Innenraum 9 hinaus.

Durch die Stützen 25 ist unterhalb des Bodens 5 und durch diesen vom Innenraum 9 getrennt ein Wasser-Vorratsraum 26 ausgebildet. Der Wasser-Vorratsraum 26 ist nach außen vom Übertopf 2 begrenzt. Im Boden 5 des Einsatz-Behälters 1 sind weiterhin Bewässerungs-Einrichtungen 27 zum Übertritt von Wasser aus dem Wasser-Vorratsraum 26 in den Innenraum 9 des Einsatz-Behälters 1 ausgebildet. Die Bewässerungs-Einrichtungen 27 sind durch sich kegelstumpfförmig verjüngende, hohl ausgebildete, also topfartige Vertiefungen im Boden 5 ausgebildet. Sie ragen in den Wasser-Vorratsraum 26 hinein. Die Bewässerungs-Einrichtungen 27 weisen schlitzförmige Wasser-Durchlassöffnungen 28 auf. Beim Ausführungsbeispiel gemäß den Fig. 1 bis 6 sind zwei Bewässerungs-Einrichtungen 27 vorgesehen. Eine andere Anzahl ist ebenfalls möglich. Die Anzahl der Bewässerungs-Einrichtungen 27 ist insbesondere von der Größe des Einsatz-Behälters 1 und vom Wasserbedarf der darin eingepflanzten Pflanzen abhängig. Es ist vorteilhafterweise auch denkbar, eine größere Anzahl Bewässerungs-Einrichtungen 27 am Boden 5 des Einsatz-Behälters 1 anzuordnen, wobei diese je nach Bedarf durch Abdeck-Platten verschließbar sind. Die Bewässerungs-Einrichtung 27 hat jeweils eine Ausdehnung in Richtung der Längsachse 10, welche höchstens so groß ist wie die der Stützen 25. Die Bewässerungs-Einrichtung 27 ist vorzugsweise um 0,5 cm bis 3 cm kürzer ausgebildet als die Stützen 25.

Außerdem sind am Boden 5 des Einsatz-Behälters 1 kleine Wasser-Rücklauföffnungen 29 ausgebildet, durch die überschüssiges Wasser aus dem Innenraum 9 des Einsatz-Behälters 1 in den Wasser-Vorratsraum 26 ablaufen kann.

Der Einsatz-Behälter 1 weist ferner ein im Bereich des oberen Randes 8 angeordnetes, in Richtung der Längsachse 10 herausziehbares Griff-Element 31 auf. Bezüglich des Griff-Elements 31 sei auf die EP 1 790 212 B1 (= DE 20 2005 018 519 U1) verwiesen. Im Gegensatz zur EP 1 790 212 B1 ist das Griff-Element 31 jedoch als umlaufender Ring 36 ausgebildet, welcher auf dem Randsteg 30 aufliegt. Der Ring 36 ist über zwei Längs-Stangen 33, welche durch Führungs-Öffnungen 34 im oberen Rand 8 hindurchgeführt sind, verbunden. Die beiden parallel zueinander verlaufenden Längs-Stangen 33 sind an ihrem dem Ring 36 entgegengesetzten Ende durch eine Quer-Stange 32 miteinander verbunden. Die Quer-Stange 32 ist an die Außenkontur des Einsatz-Behälters 1 angepasst, das heißt gebogen ausgebildet.

Zum Gebrauch wird der Einsatz-Behälter 1 mit einem Substrat, beispielsweise mit Erde und/oder einem geeigneten Granulat, gefiillt und bepflanzt. Er wird sodann in einen Übertopf 2 eingesetzt. Durch die Wasser-Einfüllöfnungen 14, 15 wird Wasser in den Wasser-Einfüllschacht 12 gegossen und gelangt so in den Wasser-Vorratsraum 26 unter dem Innenraum 9 des Einsatz-Behälters 1. Durch die Bewässerungs-Einrichtung 27 kann Wasser vom Wasser-Vorratsraum 26 in den Innenraum 9 des Einsatz-Behälters 1 gelangen. Die im Einsatz-Behälter 1 angepflanzten Pflanzen können sich so selbstständig über ihre Wurzeln mit Wasser aus dem Wasser-Vorratsraum 26 versorgen.

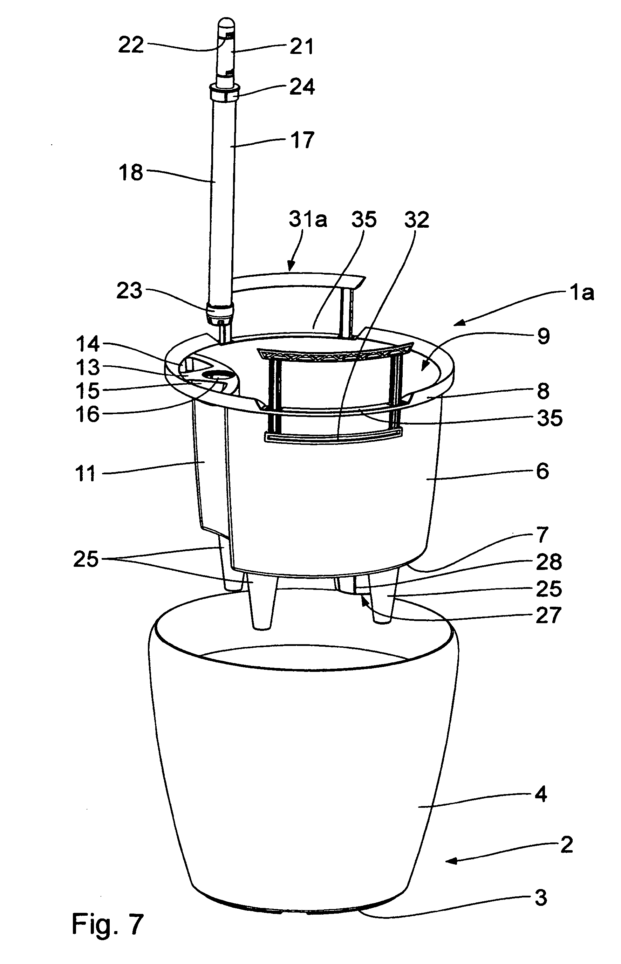

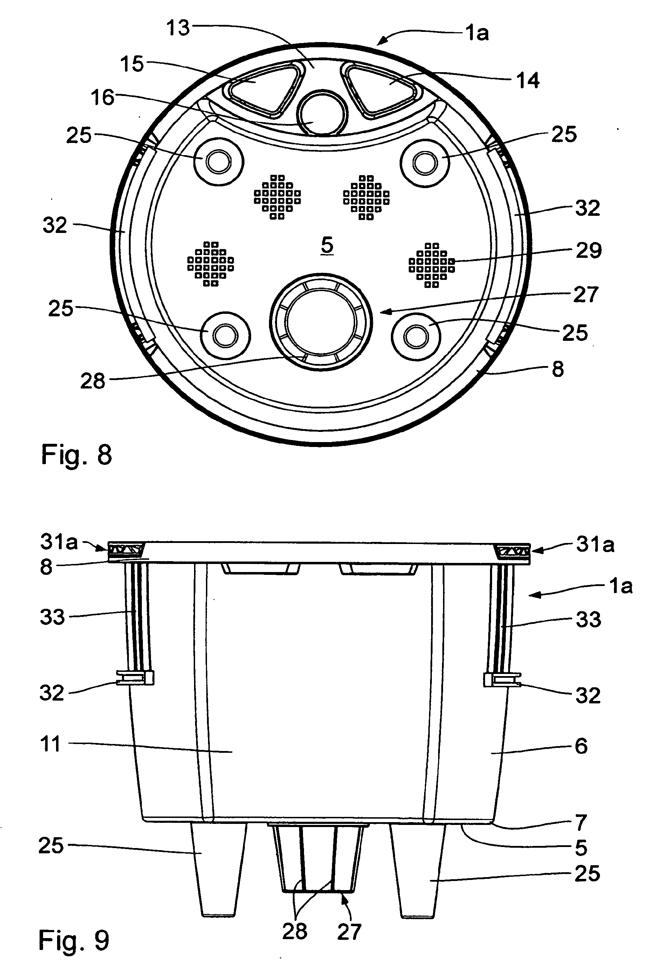

Im Folgenden wird unter Bezugnahme auf die Fig. 7 bis 9 ein zweites Ausführungsbeispiel der Erfindung beschrieben. Identische Teile erhalten dieselben Bezugszeichen wie beim ersten Ausführungsbeispiel, auf dessen Beschreibung hiermit verwiesen wird. Im Unterschied zum ersten Ausfiihrungsbeispiel sind beim zweiten Ausführungsbeispiel zwei Griff-Elemente 31 vorgesehen, welche sich jeweils über einen Kreisbogenabschnitt des oberen Randes 8 erstrecken. Der Kreisbogenabschnitt der Griff-Elemente 31 weist jeweils einen Mittelpunktswinkel im Bereich von 30° bis 90°, insbesondere im Bereich von 45° bis 60° auf. Prinzipiell können auch mehr als zwei Griff-Elemente 31 vorgesehen sein. Hierbei sind jeweils zwei Griff-Elemente 31 am oberen Rand 8 des Einsatz-Behälters 1 diametral zueinander angeordnet.

Die Griff-Elemente 31 weisen zwei parallel zueinander angeordnete Quer-Stangen 32 und zwei senkrecht auf diesen angeordnete Längs-Stangen 33 auf. Die zwei Längs-Stangen 33 sind vorteilhafterweise einteilig mit einer der Quer-Stangen 32 ausgebildet. Sie sind mit der anderen der Quer-Stangen 32 fest verbunden, insbesondere verklebt. Die Quer-Stangen 32 und die Längs-Stangen 33 sind an die Außen-Kontur des Einsatz-Behälters 1 angepasst. Die Längs-Stangen 33 sind durch Führungs-Öffnungen 34 im oberen Rand 8 des Einsatz-Behälters 1 hindurchgeführt.

Die oberen Quer-Stangen 32 der Griff-Elemente 31 sind in Aussparungen 35 im oberen Rand 8 des Einsatz-Behälters 1 aufnehmbar. Sie sind somit im eingeschobenen Zustand im oberen Rand 8 des Einsatz-Behälters 1 integriert. Dies führt zu einem besonders ästhetisch ansprechenden Gesamteindruck.

Beim zweiten Ausführungsbeispiel gemäß den Fig. 7 bis 9 ist nur eine Bewässerungs-Einrichtung 27 vorgesehen.

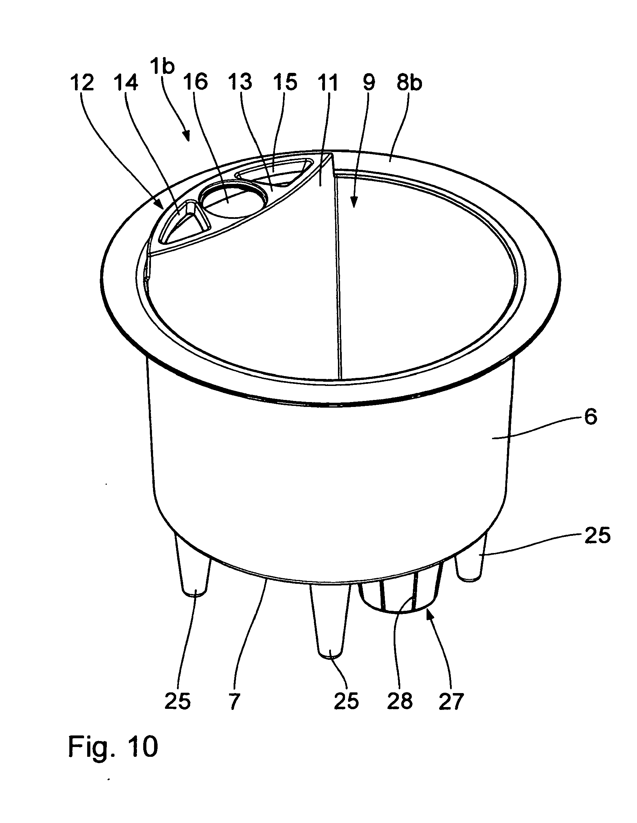

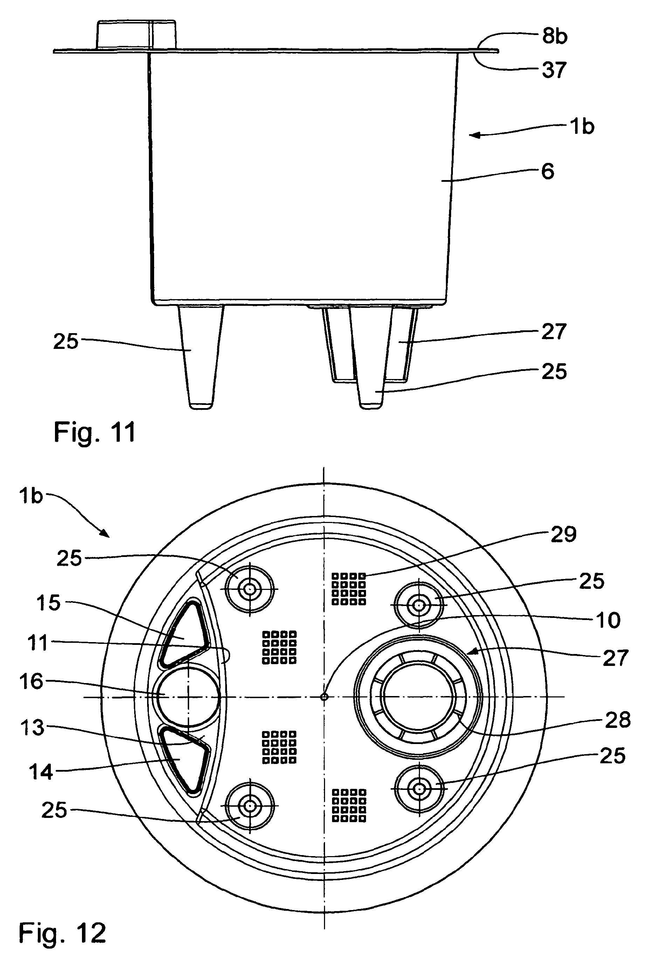

Im Folgenden wird unter Bezugnahme auf die Fig. 10 bis 12 ein drittes Ausführungsbeispiel der Erfindung beschrieben. Identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b. Beim dritten Ausführungsbeispiel ist der obere Rand 8b flach ausgebildet. Er verläuft senkrecht zur Längsachse 10 und steht seitlich um einen Überstand 37 über die Seitenwand 6 des Einsatz-Behälters 1b über. Hierdurch kann ein zwischen dem Einsatz-Behälter 1 und dem Übertopf 2 verbleibender Zwischenraum abgedeckt werden, was zu einen ansprechenderen Erscheinungsbild führt.

Der Wasser-Einfüllschacht 12 steht bei dem dritten Ausführungsbeispiel über den oberen Rand 8b über. Der obere Rand 8b bildet eine Dichtlippe. Erfindungsgemäß ist vorgesehen, den Einsatz-Behälter 1b im Übertopf 2 bis über den Rand 8b mit Substrat zu füllen. Der Einsatz-Behälter 1b ist dann bis auf den Wasser-Einfüllschacht 12 unsichtbar.

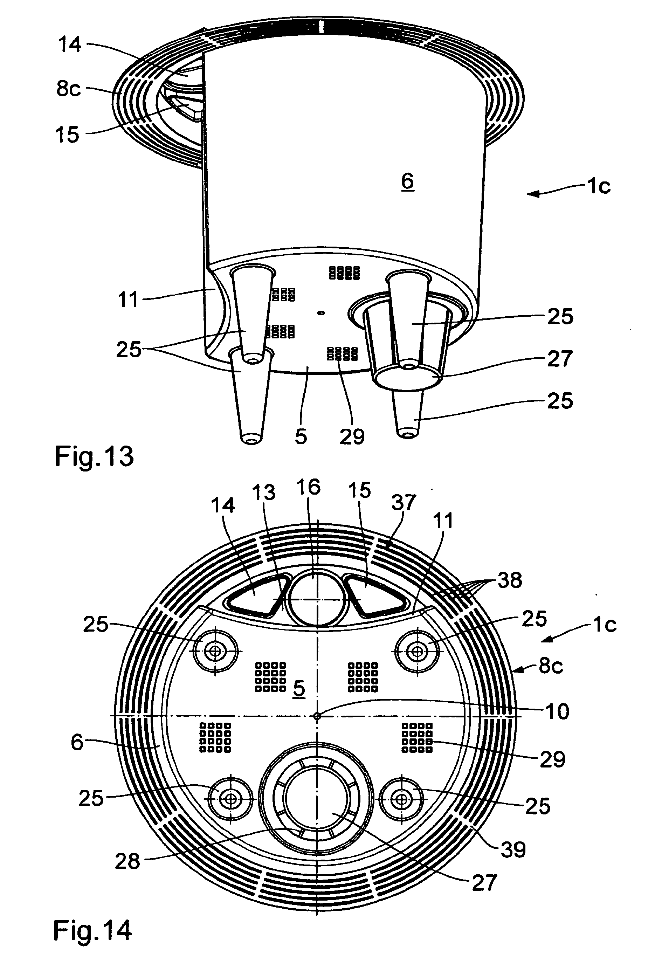

Im Folgenden wird unter Bezugnahme auf die Fig. 13 und 14 ein viertes Ausführungsbeispiel der Erfindung beschrieben. Identische Teile erhalten dieselben Bezugszeichen wie bei dem dritten Ausführungsbeispiel, auf dessen Beschreibung hiermit verwiesen wird. Beim vierten Ausfiihrungsbeispiel ist der Überstand 37 lamellenartig ausgebildet. Er umfasst mehrere konzentrisch zueinander angeordnete Lamellen 38, welche über radial zur Längsachse 10 verlaufende Stege 39 miteinander und mit der Seitenwand 6 des Einsatz-Behälters 1c verbunden sind. Diese Stege 39 lassen sich leicht durchtrennen, wodurch der obere Rand 8c einen anpassbaren Durchmesser erhält. Der Einsatz-Behälter 1c ist somit flexibel an Übertöpfe 2 mit unterschiedlichen Durchmessern anpassbar.

## Patentansprüche

1. Einsatz-Behälter (1; 1a; 1b; 1c) für Pflanztöpfe mit
a. einem Boden (5),
b. mindestens einer Seitenwand (6), welche
i. mit einem unteren Rand (7) an den Boden (5) angrenzt,
ii. mit einem oberen Rand (8; 8b; 8c) nach oben offen ausgebildet ist und
iii. einen Innenraum (9) umschließt,
c. einer senkrecht zum Boden (5) verlaufenden Längsachse (10),
d. am Boden (5) angeordneten, sich in Richtung der Längsachse (10) erstreckenden Stützen (25),
e. mindestens einer am Boden (5) angeordneten, wasserdurchlässigen Bewässerungs-Einrichtung (27) und
f. mindestens einer sich in Richtung der Längsachse (10) erstreckenden Einbuchtung (11) in der mindestens einen Seitenwand (6),
**dadurch gekennzeichnet, dass**
g. im Bereich des oberen Randes (8; 8a) mindestens ein Griff-Element (31; 31 a) vorgesehen ist,
h. das mindestens eine Griff-Element (31; 31a) in Richtung der Längsachse (10) herausziehbar ist und
i. das mindestens eine Griff-Element (31) als umlaufender Ring (36) ausgebildet ist.

2. Einsatz-Behälter (1; 1a; 1b; 1c) gemäß Anspruch 1, **dadurch gekennzeichnet, dass** der obere Rand (8; 8b; 8c) einen runden, insbesondere einen ringförmigen, insbesondere einen kreisringförmigen Querschnitt aufweist.

3. Einsatz-Behälter (1; 1a; 1b; 1c) gemäß einem der vorhergehenden Ansprüche, **dadurch gekennzeichnet, dass** er aus Kunststoff gefertigt ist.

4. Einsatz-Behälter (1; 1a; 1b; 1c) gemäß einem der vorhergehenden Ansprüche, **dadurch gekennzeichnet, dass** die Bewässerungs-Einrichtung (27) als topfartige Vertiefung mit Wasser-Durchlassöffnungen (28) ausgebildet ist.

5. Einsatz-Behälter (1; 1a; 1b; 1c) gemäß Anspruch 4, **dadurch gekennzeichnet, dass** die Wasser-Durchlassöffnungen (28) schlitzförmig ausgebildet sind.

6. Einsatz-Behälter (1; 1a; 1b; 1c) gemäß einem der vorhergehenden Ansprüche, **dadurch gekennzeichnet, dass** die Einbuchtung (11) vom Innraum (9) her gesehen konkav ausgebildet ist.

7. Einsatz-Behälter (1; 1a; 1b; 1c) gemäß einem der vorhergehenden Ansprüche, **dadurch gekennzeichnet, dass** im Bereich der Einbuchtung (11) außerhalb des Innenraums (9) ein Wasserstands-Anzeiger (17) angeordnet ist.

8. Einsatz-Behälter (1; 1a; 1b; 1c) gemäß einem der vorhergehenden Ansprüche, **dadurch gekennzeichnet, dass** der obere Rand (8; 8b; 8c) sich ausgehend von der Seitenwand (6) nach außen erstreckt.

9. Einsatz-Behälter (1; 1a; 1b; 1c) gemäß einem der vorhergehenden Ansprüche, **dadurch gekennzeichnet, dass** der obere Rand (8c) lamellenartig ausgebildet ist.

10. Einsatz-Behälter (1; 1a; 1b; 1c) gemäß einem der vorhergehenden Ansprüche, **dadurch gekennzeichnet, dass** der obere Rand (8c) einen anpassbaren Durchmesser aufweist.

## Claims

1. Insert container (1; 1a; 1b; 1c) for plant pots with
a. a base (5),
b. at least one side wall (6), which
i. adjoins the base (5) with a lower edge (7),
ii. is formed with an upper edge (8; 8b; 8c) open at the top and
iii. surrounds an interior (9),
c. a longitudinal axis (10) extending perpendicular to the base (5),
d. supports (25) arranged on the base (5) and extending in the direction of the longitudinal axis (10),
e. at least one water-permeable watering device (27) arranged on the base (5) and
f. at least one indentation (11) which extends in the direction of the
longitudinal axis (10), in the at least one side wall (6), **characterized in that**
g. at least one handle element (31; 31a) is provided in the region of the upper edge (8; 8a),
h. the at least one handle element (31; 31a) can be pulled out in the direction of the longitudinal axis (10) and
i. the at least one handle element (31) is formed as a peripheral ring (36).

2. Insert container (1; 1a; 1b; 1c) according to claim 1, **characterised in that** the upper edge (8; 8b; 8c) has a round, in particular an annular, in particular a circular ring-shaped cross section.

3. Insert container (1; 1a; 1b; 1c) according to any one of the preceding claims, **characterised in that** it is manufactured from plastics material.

4. Insert container (1; 1a; 1b; 1c) according to any one of the preceding claims, **characterised in that** the watering device (27) is formed as a pot-like recess with water through-openings (28).

5. Insert container (1; 1a; 1b; 1c) according to claim 4, **characterised in that** the water through-openings (28) are slot-shaped.

6. Insert container (1; 1a; 1b; 1c) according to any one of the preceding claims, **characterised in that** the indentation (11) is concave, viewed from the interior (9).

7. Insert container (1; 1a; 1b; 1c) according to any one of the preceding claims, **characterised in that** a water level indicator (17) is arranged in the region of the indentation (11) outside the interior (9).

8. Insert container (1; 1a; 1b; 1c) according to any one of the preceding claims, **characterised in that** the upper edge (8; 8b; 8c) extends outwardly proceeding from the side wall (6).

9. Insert container (1; 1a; 1b; 1c) according to any one of the preceding claims, **characterised in that** the upper edge (8c) is lamellar.

10. Insert container (1; 1a; 1b; 1c) according to any one of the preceding claims, **characterised in that** the upper edge (8c) has an adaptable diameter.

## Revendications

1. Récipient d'insertion (1 ; 1a ; 1b ; 1c) pour pots de plantes comprenant
a. un fond (5),
b. au moins une paroi latérale (6) qui
i. est attenante au fond (5) par l'intermédiaire de son bord inférieur (7),
ii. est ouverte vers le haut par l'intermédiaire de son bord supérieur (8 ; 8b ; 8c) et
iii. entoure un espace intérieur (9),
c. un axe longitudinal (10) évoluant perpendiculairement par rapport au fond (5),
d. des pieds (25), dressés dans la direction de l'axe longitudinal, disposés dans le fond (5),
e. au moins un dispositif d'arrosage (27), permettant le passage de l'eau, disposé dans le fond (5) et
f. au moins une cavité creusée (11) dans au moins une paroi latérale (6) orientée dans la direction de l'axe longitudinal (10),
**caractérisé en ce**
g. **qu'**un élément formant une poignée (31 ; 31a) est prévu dans la zone du bord supérieur (8 ; 8a),
h. **qu'**au moins un élément formant une poignée (31 ; 31a) peut être tiré vers l'extérieur dans la direction de l'axe longitudinal (10) et
i. **qu'**au moins un élément formant une poignée (31) est conçu sous la forme d'un anneau (31) faisant le tour.

2. Récipient d'insertion (1 ; 1a ; 1b ; 1c) selon la revendication 1 **caractérisé en ce que** le bord supérieur (8 ; 8b ; 8c) présente une section circulaire, en particulier en forme d'anneau, en particulier en forme d'anneau circulaire.

3. Récipient d'insertion (1 ; 1a ; 1b ; 1c) selon l'une des revendications précédentes **caractérisé en ce qu'**il est fabriqué dans une matière synthétique.

4. Récipient d'insertion (1 ; 1a ; 1b ; 1c) selon l'une des revendications précédentes **caractérisé en ce que** le dispositif d'arrosage (27) est conçu sous la forme d'une cavité comme une sorte de pot comprenant des trous de passage pour l'eau (28).

5. Récipient d'insertion (1 ; 1a ; 1b ; 1c) selon la revendication 4 **caractérisé en ce que** les trous de passage pour l'eau (28) sont conçus sous la forme de fentes.

6. Récipient d'insertion (1 ; 1a ; 1b ; 1c) selon l'une des revendications précédentes **caractérisé en ce que** la cavité creusée (11) est conçue de forme concave vu de l'espace intérieur (9).

7. Récipient d'insertion (1 ; 1a ; 1b ; 1c) selon l'une des revendications précédentes **caractérisé en ce qu'**un indicateur de niveau d'eau (17) est disposé dans la zone de la cavité creusée (11) à l'extérieur de l'espace interne.

8. Récipient d'insertion (1 ; 1a ; 1b ; 1c) selon l'une des revendications précédentes **caractérisé en ce que** le bord supérieur (8 ; 8b ; 8c) est étiré vers l'extérieur en partant de la paroi latérale (6).

9. Récipient d'insertion (1 ; 1a ; 1b ; 1c) selon l'une des revendications précédentes **caractérisé en ce que** le bord supérieur (8c) est conçu sous la forme de lamelles.

10. Récipient d'insertion (1 ; 1a ; 1b ; 1c) selon l'une des revendications précédentes **caractérisé en ce que** le bord supérieur (8c) présente un diamètre pouvant s'adapter.
